Europäisches Patentamt

(19) European Patent Office

Office européen des brevets

(11) Numéro de publication: **0 178 964**
**B1**

(12) **FASCICULE DE BREVET EUROPEEN**

(45) Date de publication du fascicule du brevet:
06.12.89

(51) Int. Cl.⁴: **G01D 1/00**, G08B 29/00

(21) Numéro de dépôt: **85401757.1**

(22) Date de dépôt: **10.09.85**

(54) Méthode de validation de la valeur d'un paramètre.

(30) Priorité: **13.09.84 FR 8414065**

(43) Date de publication de la demande:
**23.04.86 Bulletin 86/17**

(45) Mention de la délivrance du brevet:
**06.12.89 Bulletin 89/49**

(84) Etats contractants désignés:
**BE CH DE GB IT LI SE**

(56) Documents cités:
**DE-A- 3 011 892**
**US-A- 3 476 922**
**US-A- 3 976 860**

(73) Titulaire: **FRAMATOME, Tour Fiat 1, Place de la Coupole,
F-92400 Courbevoie(FR)**

(72) Inventeur: **Le Rat, Guy, 10, Cours des Petites Ecuries
Lognes, F-77200 Torcy(FR)**
Inventeur: **Lagache, Jean Marc, 2, rue Emile Gilbert,
F-75012 Paris(FR)**

(74) Mandataire: **Mongrédien, André et al, c/o
BREVATOME 25, rue de Ponthieu, F-75008 Paris(FR)**

ACTORUM AG

## Description

La présente invention a pour objet une méthode de validation de la valeur d'un paramètre. Cette méthode s'applique dans tous les domaines où pour des raisons de sécurité ou de productivité notamment, la connaissance d'une valeur fiable d'un paramètre, grandeur physique ou autre, est primordiale. Dans ce cas, on utilise une pluralité de capteurs et/ou de moyens de calcul redondants pour mesurer ou calculer des valeurs de ce paramètre. En fonction desdites valeurs, on valide une valeur de ce paramètre. L'invention a pour objet une telle méthode de validation.

Le besoin de s'assurer qu'une mesure physique est correcte s'est considérablement accru, notamment avec l'utilisation industrielle de l'énergie nucléaire. Certains incidents ont mis en lumière les conséquences d'une instrumentation défaillante entraînant soit des arrêts intempestifs préjudiciables à la productivité, soit des analyses erronées de la part des opérateurs pouvant induire des décisions dangereuses.

Pour pallier ceci, on utilise de manière connue une pluralité de capteurs, créant ainsi une redondance permettant, par comparaison, une évaluation plus fiable de la valeur du paramètre, même en présence d'un capteur défaillant. Les capteurs peuvent éventuellement être remplacés par des modèles qui, en fonction de mesures indirectes, déduisent par le calcul une valeur du paramètre. Le remplacement de capteurs par des modèles est courant en industrie aérospatiale dans le but de réduire le poids.

La méthode de validation doit notamment permettre de déterminer les défaillances d'un capteur ou d'un modèle tels qu'un biais, une dérive, une saturation de signal, un bruit additif à la mesure. ou des valeurs aberrantes.

On connaît des méthodes permettant de détecter une ou plusieurs de ces défaillances. Toutefois, aucune des méthodes connues ne permet de détecter toutes ces défaillances. Par ailleurs, ces méthodes sont en général susceptibles de détecter une discordance entre les voies de mesure mais ne sont pas toujours capables d'identifier la ou les voies défaillantes.

On connaît une première méthode, dite de test des signes, qui permet de valider la valeur d'un paramètre mesuré par deux capteurs appariés. La méthode consiste à étudier la différence $d_i = x_i - y_i$ où $x_i$ et $y_i$ sont les valeurs échantillonnées des signaux délivrés par les deux capteurs à l'instant i, où $i \geqslant 1$. Le nombre k de différences $d_i$ positives suit une loi binômiale définie par la taille n de chaque échantillon et par la probabilité p=0,5.

Le principe de la validation consiste à mémoriser les signes des n dernières différences entre les deux séries de mesure. Une alarme est déclenchée dès que le nombre de différences de même signe est supérieur à

$$\frac{n}{2} + n_0, \text{ où } n_0$$

est un seuil qui dépend d'un compromis entre la sensibilité désirée et la probabilité de fausse alarme.

Cette méthode a pour inconvénient que, par principe, elle n'est pas sensible à l'amplitude de la différence. Dès l'instant où une mesure est supérieure, ou inférieure, à l'autre pendant un temps suffisamment long, même avec un écart très faible, la détection est inévitable sans aucune possibilité de régler la sensibilité. Cette méthode exige donc des capteurs des performances qui ne sont pas réalistes en milieu industriel (étalonnage rigoureux, linéarité absolue sur toute l'échelle de mesures, temps de réponse identique,...)

Cette méthode ne peut détecter ni bruit, si celui-ci est plus ou moins centré par rapport au signal valide, ni valeur aberrante mais détecte en revanche un biais même s'il est très faible. Une dérive ou une saturation de signal sont correctement détectées.

Cette méthode n'est pas très bien adaptée à la validation d'une mesure. Elle valide en effet tantôt des mesures incohérentes (bruit) et déclenche tantôt de fausses alarmes (biais faible).

On connaît une deuxième méthode dite méthode des appariements consistant également à étudier à variable $d_i$ définie plus haut. Si les deux capteurs délivrent des signaux cohérents, la variable d est une loi normale de moyenne O et d'écart type $\sigma_d$.

La variable $m_i$ égale à :

$$( \sum_{j=1}^{i} d_j )/N,$$

suit alors une loi normale de moyenne 0 et d'écart type

$$\sigma_d / \sqrt{N}.$$

Il en résulte que la variable t égale à

$$(m_d \cdot \sqrt{N}) / \sigma_d$$

suit une loi de Student-Fischer à n-1 degrés de liberté.

Un défaut est détecté si la valeur observée de la variable t devient supérieure à un seuil r déterminé en fonction de la table de la loi de Student-Fischer.

Ce test réagit mal à certains défauts tels que le bruit, les dérives rapides et un biais en présence de valeurs aberrantes. Cette méthode ne permet en fait que la détection d'une défaillance représentant un décalage des signaux.

On connaît une troisième méthode dans laquelle on dispose de n capteurs redondants, où n est supérieur à 3, donnant, à chaque instant d'échantillonnage, n observations $X_1$, $X_2$,..., $X_n$. A chaque instant d'échantillonnage, on définit :

la moyenne arithmétique :

$$x = \frac{1}{n} \sum_{i=1}^{n} x_i$$

l'étendue de l'observation : $\delta = X_{max} - X_{min}$

le milieu de l'étendue :

$$\hat{x} = \frac{1}{2} (X_{max} - X_{min})$$

En fonctionnement normal, les mesures sont correctement réparties autour de la valeur vraie m. Lorsqu'une mesure s'écarte de la répartition normale, x et $\hat{x}$ s'écartent de m, mais de façon plus sensible pour $\hat{x}$ que pour x.

Cette propriété est exploitée pour la détection de discordance. A chaque instant d'échantillonnage, le test porte sur le rapport

$$Q = \left| \frac{\hat{x} - x}{\delta} \right| .$$

Si Q dépasse un certain seuil prédéterminé, la mesure la plus excentrée est éliminée et l'on procède à une nouvelle validation avec les n-1 mesures restantes.

Cette méthode nécessite un ordre de redondance supérieur ou égal à 3 car, si n=2, Q est constamment nul. Dans le cas où l'ordre de redondance est égal à 3, lorsque Q dépasse le seuil, la mesure la plus excentrée est éliminée et une nouvelle validation à partir des deux mesures restantes n'est plus possible.

Quelle que soit la valeur du seuil, cette méthode conduit à de fausses détections en situation normale ou à des non détections en situation anormale (biais ou dérives importantes).

On connaît une quatrième méthode dite de test séquentiel du rapport de vraisemblance. Cette méthode utilise les propriétés statistiques des échantillons temporels du signal qui caractérisent l'écart $x_3(t)$ entre deux mesures $x_1(t)$ et $x_2(t)$ délivrées par deux capteurs redondants.

Le test porte sur la même grandeur que celle du test par la méthode des appariements. L'intérêt de cette méthode réside dans le fait qu'elle prend en compte les notions de probabilité de fausses alarmes et de non-détections. Les méthodes permettant d'évaluer ces probabilités sont fondées sur une connaissance des lois de distribution qui, bien souvent, n'est pas effective en milieu industriel, le choix des seuils nécessaires à la méthode de validation s'affinant généralement d'une façon empirique lors de la mise en service industrielle.

Cette méthode présente les mêmes défauts que la méthode des appariements. Elle ne permet de mettre en évidence qu'un décalage entre les deux signaux.

On connaît une cinquième méthode qui s'applique lorsque deux mesures directes sont disponibles et quand une troisième mesure peut être obtenue par corrélation. La détection d'une discordance entre les deux voies directes s'obtient par une comparaison du signal d'écart à des seuils fixes. En cas de discordance, on fait appel à la troisième voie de mesure pour localiser la voie défaillante. Le mesure validée est celle qui est la plus proche de cette troisième mesure obtenue par corrélation. En cas de non discordance, la mesure validée est la valeur moyenne des deux signaux issus des deux capteurs.

Cette méthode est beaucoup moins élaborée que les méthodes précédentes car elle n'utilise pas la théorie de la détection. Le test est ponctuel ; il porte sur l'écart entre les signaux à un instant donné. Cette méthode est très peu performante car elle ne tient pas compte de l'histoire des signaux. En revanche, lors de l'apparition d'un défaut, la réponse est immédiate.

On connaît enfin une sixième méthode développée par Electricité de France. Elle s'appuie sur une théorie complexe et est applicable pour tout ordre de redondance supérieur ou égal à 2.

Cette méthode dite de l'espace de parité consiste à définir et à visualiser un vecteur qui est un reflet de la discordance entre les différentes voies. La norme de ce vecteur de parité permet de détecter une discordance, sa direction permet de localiser la voie défaillante.

Cette méthode consiste à comparer deux à deux les mesures issues des capteurs redondants. Deux mesures sont cohérentes lorsque leur domaine de tolérence, défini par les caractéristiques de précision, d'hystérésis et de linéarité du capteur, se recoupent laissant présager, a priori, que la valeur vraie (inconnue) de la grandeur mesurée se situe dans cette intersection.

La méthode de détection est ponctuelle. Elle s'attache à l'instant présent sans prendre en compte le passé et perd donc beaucoup d'informations. Cette approche est peu adaptée à une détection optimale de tous les types de défauts. Par exemple, dans le cas d'une dérive d'un capteur parmi trois capteurs, cette méthode est incapable de déterminer rapidement le capteur défaillant. De plus, lors de l'apparition d'une défaillance multiple, cette méthode est incapable d'engendrer une information. De manière générale, la méthode de l'espace de parité ne permet pas d'atteindre le type de défaut, mais seulement de détecter une discordance entre les voies redondantes.

La description précédente a mis en évidence les défauts des méthodes de validation connues. Elle montre que s'il est facile d'élaborer une méthode de validation réagissant bien à un seul type de défaillance, il est délicat d'en concevoir une ayant un bon comportement en présence des cinq types de pannes les plus probables. Avec les méthodes connues, on observe souvent des cas de non-détection de défauts ou de détection abusive entraînant une fausse alarme.

Les méthodes de validation utilisant les caractéristiques statistiques de la différence entre deux voies de mesures ne semblent pas adaptées au problème de la validation des mesures. Ces méthodes supposent en effet une distribution gaussienne des différences. Or, en régime dynamique ou lorsqu'apparaît un défaut, cette hypothèse devient caduque. Il faut alors traiter un échantillon important pour effectuer une détection dans des conditions suffisantes de fiabilité, ceci au détriment du temps de réponse.

D'autre part, une méthode de validation ponctuelle est incapable, dès que la différence entre deux voies dépasse un certain seuil, d'engendrer une information fiable. Une telle méthode s'attache aux informations de l'instant présent. Le passé n'est pas pris en compte alors que dans certains cas sa connaissance peut aider à prendre une décision.

On pourra se reporter par ailleurs, à la demande US 3 476 922 qui décrit un système de contrôle à deux voies de redondance dans lequel chaque voie traite des données qui sont identiques en cas de bon fonctionnement et qui diffèrent dans le cas contraire. Les données sont comparées et invalidées ou non en fonction d'un seuil.

L'invention a pour objet une méthode de validation d'une mesure palliant les inconvénients des méthodes connues. Selon l'invention, la valeur validée du paramètre à un instant T est déterminée en fonction, pour chaque voie de mesure, d'un échantillon de N valeurs mesurées aux N instants d'échantillonnages précédent l'instant T.

La méthode de l'invention tient compte de l'histoire des signaux. Cependant, à la différence des méthodes connues et décrites ci-dessus, la méthode de l'invention n'effectue pas un traitement statistique sur ces échantillons mais définit, pour chaque voie, un modèle du signal délivré par cette voie en fonction de l'échantillon de cette voie. Cette modélisation permet d'évaluer la tendance du signal de chaque voie.

Cette modélisation permet en outre de détecter une éventuelle discordance entre les voies par une comparaison, à plusieurs niveaux, de ces tendances. Dans le cas d'une discordance entre les voies, la méthode permet, à l'aide des modèles de chaque voie, d'extrapoler une valeur fiable du paramètre.

De manière plus précise, l'invention est définie et caractérisée par la revendication 1.

De manière préférée, le modèle de chaque voie est la droite obtenue à partir de l'échantillon de ladite voie par la méthode des moindres carrés, ledit modèle de voie étant valide si le coefficient de dispersion entre ledit échantillon et ladite droite est inférieur à un seuil de dispersion prédéterminé.

Ce coefficient de dispersion peut par exemple être égal à la somme des carrés des distances entre un point de l'échantillon et le point correspondant sur la droite modélisant cet échantillon. Le coefficient de dispersion est d'autant plus grand que l'échantillon est dispersé autour de la droite.

Selon une variante de la méthode de l'invention, lorsqu'un modèle de voie n'est pas valide, on élimine de l'échantillon la valeur dont la distance au point correspondant sur la droite est la plus grande.

On obtient un échantillon de taille N-1 pour lequel on calcule la droite associée. On peut itérer le procédé jusqu'à obtenir une droite dont le coefficient de dispersion associé est inférieur au seuil prédéterminé. Cependant, la taille de l'échantillon étant de plus en plus faible, la représentativité de la droite modélisée est de moins en moins importante. Au-delà d'une taille d'échantillon minimale, il est donc préférable de ne pas tenir compte de la voie correspondante.

Selon une autre variante de la méthode de l'invention, lorsqu'un modèle de voie n'est pas valide, on modifie l'échantillon de ladite voie en remplaçant la valeur qui s'écarte le plus de la moyenne des valeurs dudit échantillon par ladite moyenne, et on remplace le modèle de voie par le modèle de voie associé à l'échantillon modifié.

Cette méthode permet de détecter et d'éliminer une valeur aberrante dans l'échantillon d'une voie. Il est possible de rechercher et d'éliminer une seconde valeur aberrante si le modèle de voie associé à l'échantillon modifié n'est pas valide. De cette manière, on peut valider le modèle de voie en éliminant succcessivement toutes les valeurs aberrantes. Cependant, plus on remplace de valeurs dans l'échantillon et moins le modèle de voie est fiable. On considèrera donc qu'un échantillon contenant plus de valeurs aberrantes qu'un nombre prédéterminé ne peut être représenté par un modèle de voie valide. Cette voie ne sera alors pas prise en compte pour l'élaboration de la valeur du paramètre.

Selon une autre variante de la méthode de l'invention, on teste la cohérence des modèles valides. Ce test permet de détecter les voies présentant une défaillance telle qu'une dérive, un biais, un bruit et une saturation.

Selon une autre variante de la méthode de l'invention, si à un instant d'échantillonnage le nombre de modèle valides et cohérents est inférieur à un nombre prédéterminé, on conserve comme modèle pour le paramètre le dernier modèle élaboré.

Selon encore une autre variante de la méthode de l'invention, la valeur validée du paramètre est déterminée en fonction des modèles valides et cohérents si leur nombre est supérieur ou égal audit nombre prédéterminé et en fonction du modèle pour le paramètre dans le cas contraire.

Les caractéristiques et avantages de l'invention ressortiront mieux de la description qui va suivre, donnée à titre illustratif mais non limitatif, en référence aux dessins annexés, sur lesquels :

- les figures 1A et 1B représentent un organigramme expliquant le fonctionnement de la méthode de l'invention,

- les figures 2 à 8 sont des graphiques sur chacun desquels on a représenté les trois signaux délivrés par trois capteurs redondants et la valeur validée du paramètre déterminée, selon la méthode de l'invention, en fonction desdits signaux ; ces graphiques représentent respectivement les cas suivants :

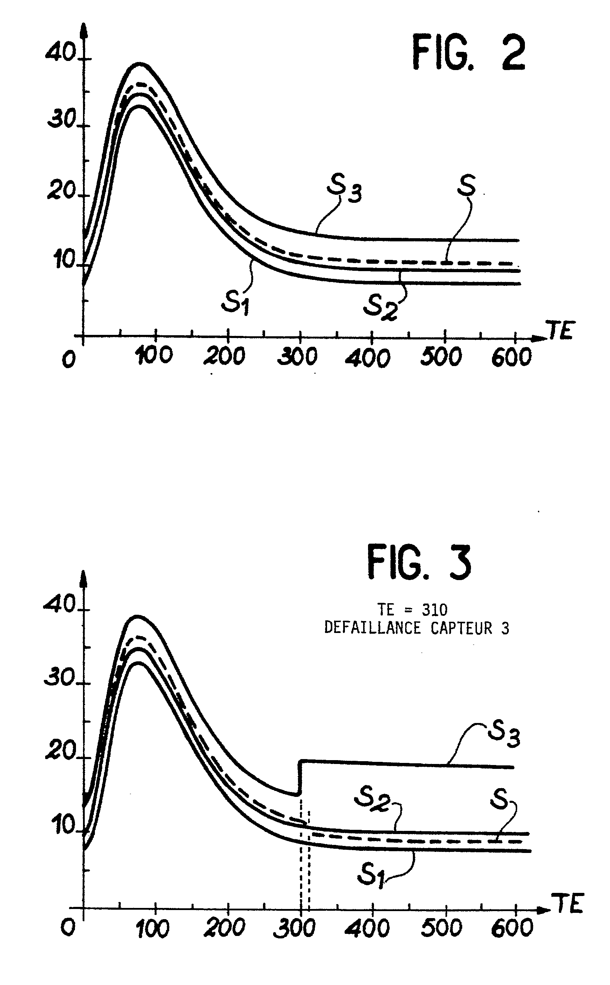

• figure 2 : les trois signaux mesurés sont cohérents,

• figure 3 : biais sur le signal délivré par le capteur 3,

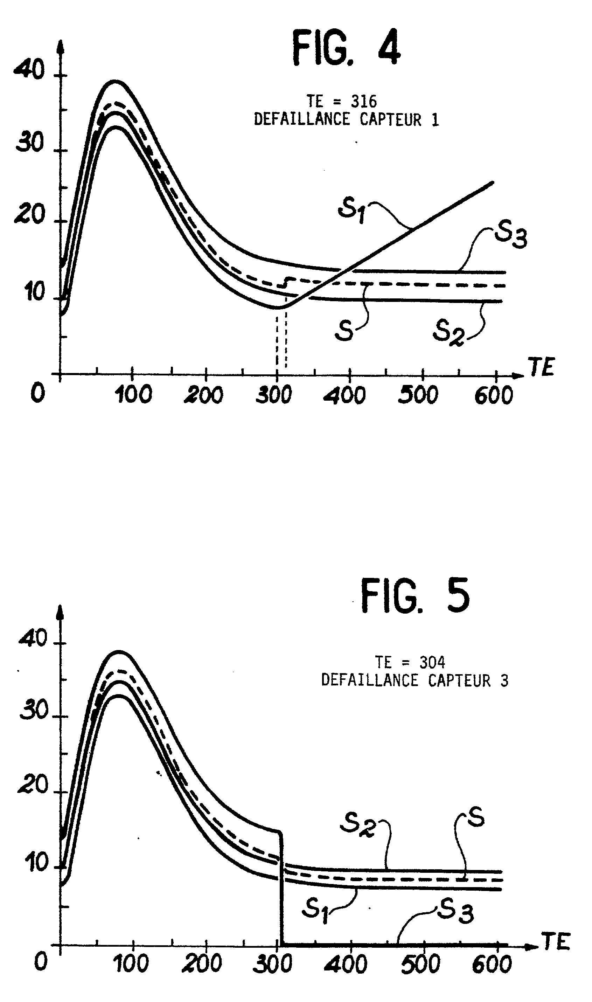

• figure 4 : dérive du signal délivré par le capteur 1,

• figure 5 : rupture du capteur 3,

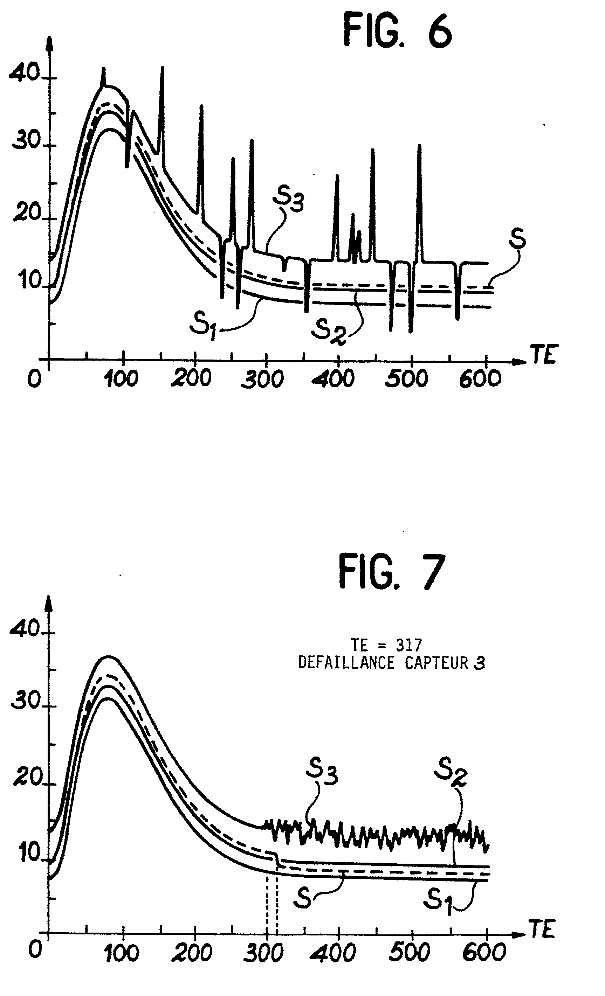

• figure 6 : valeurs aberrantes sur le signal délivré par le capteur 3,

• figure 7 : bruit sur le signal délivré par le capteur 2,

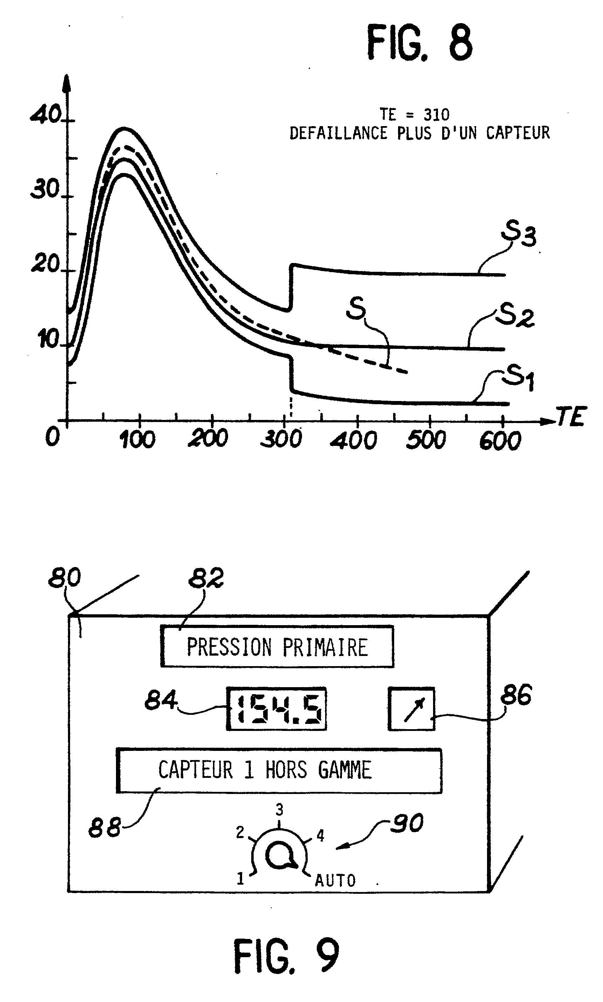

• figure 8 : biais sur les signaux délivrés par les capteurs 1 et 3,
• la figure 9 illustre l'utilisation de la méthode de validation de l'invention à la détermination de la pression primaire dans le coeur d'un réacteur nucléaire.

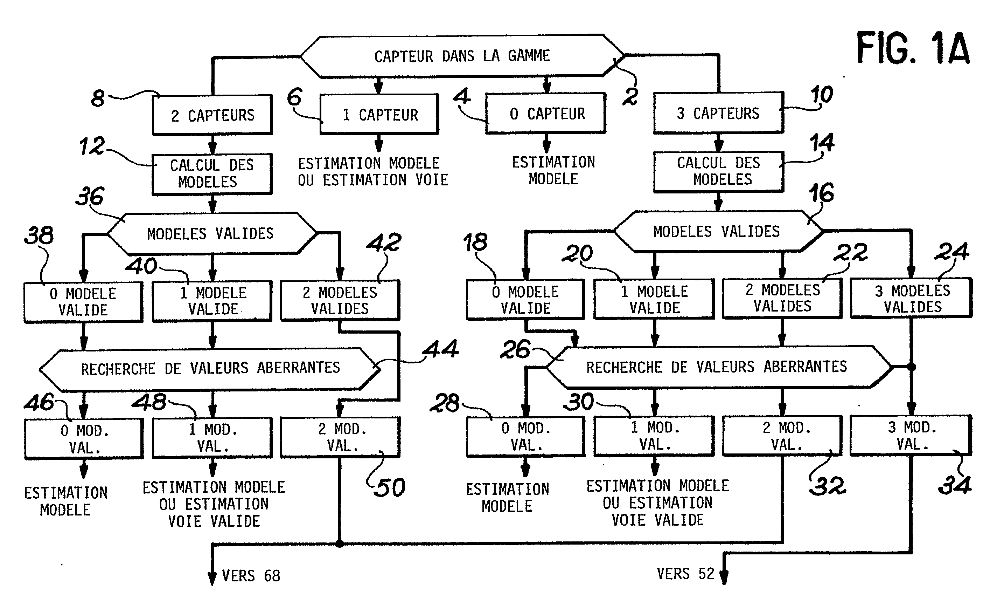

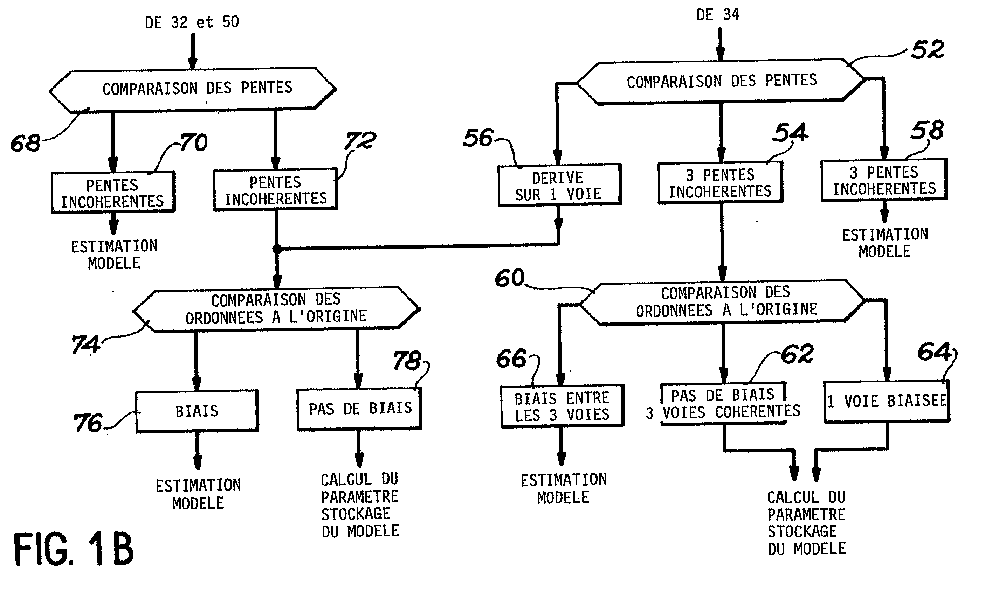

La méthode de l'invention s'applique pour un ordre de redondance supérieur ou égal à 2. L'organigramme des figures 1A et 1B qui explique le fonctionnement de la méthode de l'invention a été représenté dans le cas particulier, fréquent en pratique, où l'ordre de redondance est égal à trois.

Les signaux délivrés par les trois capteurs (ou modèles) redondants sont échantillonnés avec une période T. A l'instant K.T, on valide une valeur du paramètre en considérant, pour chaque capteur, l'échantillon de taille N qui représente les N dernières valeurs prises par le paramètre mesuré par ledit capteur.

La validation d'une valeur du paramètre s'effectue de la manière suivante. Dans un premier temps, on teste, dans l'étape 2 de l'organigramme, si la valeur mesurée à l'instant K.T du signal délivré par chaque capteur est comprise dans la gamme des valeurs admissibles par ledit capteur. Une voie hors gamme n'est pas prise en compte dans les traitements ultérieurs. Après ce test, on se trouve dans l'un des quatre états référencés 4, 6, 8 et 10. Dans les états 4 et 6, il reste au plus un capteur dans la gamme ; il n'est donc pas possible de déterminer une valeur valide du paramètre par comparaison entre plusieurs capteurs. La valeur du paramètre est donc déterminée par extrapolation à partir de modèles mémorisés. Dans les états 8 et 10, il est possible d'effectuer une comparaison entre les signaux délivrés par les différents capteurs.

Dans chacun de ces cas, on va, pour chaque capteur, modéliser l'échantillon des N dernières valeurs prises par le paramètre mesuré par ledit capteur, par une droite calculée par la méthode des moindres carrés. Pour chaque capteur, la droite obtenue constitue une approximation linéaire du signal délivré. Cette approximation linéaire permet une comparaison plus facile des signaux délivrés par chacun des capteurs et permet en outre une extrapolation, grâce à la connaissance de la tendance de chaque signal.

Les traitements effectués selon que l'on se trouve dans les états 8 ou 10 sont assez proches. Les tests sont identiques mais la méthode de détermination de la valeur du paramètre peut différer selon le résultat de ces tests. On va tout d'abord décrire le fonctionnement de la méthode correspondant à l'état 10.

Dans l'étape 14, on calcule pour chacun des trois capteurs pris en compte la pente $M_i$ et l'ordonnée à l'origine de l'échantillon $D_i$ de la droite modélisant, par la méthode des moindres carrés l'échantillon du capteur i, où i est compris entre 1 et 3. Pour chaque capteur, on calcule également le coefficient de dispersion $D_i$ reflétant la dispersion des points de l'échantillon autour de la droite.

Ce coefficient de dispersion est positif. Il est d'autant plus faible que l'échantillon modélisé est proche de la droite. Pour chaque capteur, le coefficient de dispersion obtenu est comparé un seuil de dispersion prédéterminé. Cette comparaison fait l'objet du test 16 de l'organigramme. Un modèle est valide, et pris en compte dans la suite du traitement, si son coefficient de dispersion est inférieur au seuil de dispersion. A l'issue de ce test, quatre états sont possibles qui correspondent à 0, 1, 2 ou 3 modèles valides. Ces états sont référencés respectivement 18, 20, 22 et 24.

Dans le cas où l'un des modèles au moins est reconnu non valide, ceci peut être dû soit à une trop grande dispersion de l'échantillon modélisé, soit à une ou plusieurs valeurs aberrantes dans un échantillon par ailleurs à faible dispersion. Dans le second cas, le modèle peut être rendu valide si on élimine cette valeur aberrante.

Le test 26 appliqué aux échantillons dans le cas des états 18, 20 ou 22 a pour objet la recherche d'une valeur aberrante dans un échantillon. Ce test consiste, pour chaque échantillon d'un modèle non valide, à éliminer la valeur la plus dispersée, c'est-à-dire celle dont la distance au point correspondant sur la droite modélisée est la plus grande. L'échantillon ne conserve alors plus que N-1 valeurs. Du point de vue géométrique, chaque valeur de l'échantillon et la droite modélisée étant représentées dans un plan ayant en abscisses le temps et en ordonnées l'amplitude, la valeur éliminée est celle pour laquelle la différence entre cette valeur et sa projection sur la droite, parallèlement à l'axe des ordonnées, est la plus importante.

Si le coefficient de dispersion associé à l'échantillon modifié est inférieur au seuil de dispersion, on considère que la valeur éliminée est une valeur aberrante de l'échantillon et le modèle correspondant à l'échantillon modifié est valide. Si au contraire le coefficient de dispersion est à nouveau supérieur au seuil de dispersion, l'échantillon contient encore une ou plusieurs valeurs aberrantes. On répète alors le test 26 de recherche des valeurs aberrantes. Si après L'élimination d'un nombre prédéterminé de valeurs aberrantes, par exemple N/5, où N est la taille de l'échantillon, le modèle n'est toujours pas valide, la voie est considérée défaillante et n'est pas prise en compte pour le calcul de la valeur validée du paramètre.

Selon une variante, le test 26 peut consister, pour chaque échantillon d'un modèle non valide, à :

- calculer la moyenne des valeurs de l'échantillon,
- calculer, par la méthode des moindres carrés, la droite et le coefficient de corrélation correspondant à l'échantillon dans lequel on a remplacé la valeur qui s'écarte le plus de ladite moyenne par ladite moyenne.

De même que dans le test précédent, le test peut être répété jusqu'au remplacement d'un nombre prédéterminé, par exemple N/5, de valeurs aberrantes.

A l'instant d'échantillonnage suivant, la validité de cette voie est à nouveau étudiée sur la base de l'échantillon constitué des N plus récentes valeurs mesurées du signal de cette voie, c'est-à-dire l'échantillon comprenant les éventuelles valeurs aberrantes éliminées à l'instant d'échantillonnage précédent pour l'élaboration du modèle de voie.

A l'issue de ce test, on est passé de l'un des états 18, 20 ou 22 à l'un des états 28, 30, 32 ou 34 qui correspondent respectivement à 0, 1, 2 ou 3 modèles valides.

Les tests 16 et 26 qui ont été effectués sur les modèles des échantillons des trois capteurs de l'état 10 ont permis de définir les modèles valides à partir de la comparaison desquels la valeur du paramètre va être déterminée.

Ces mêmes tests sont effectués sur les deux capteurs de l'état 8. Pour les échantillons de chacun de ces capteurs, on calcule, dans l'étape 12, la droite modélisant ledit échantillon par la méthode des moindres carrés. On calcule également les coefficients de corrélation entre ledit échantillon et ladite droite. On effectue sur ces modèles un test de validité 36 identique au test 16. On se trouve alors dans l'un des trois états 38, 40 ou 42 correspondant respectivement à 0, 1 ou 2 modèles valides. Si l'un des modèles au moins est non valide, on effectue le test 44 de recherche des valeurs aberrantes. Ce test est identique au test 26. Après ce test, on se trouve dans l'état 46 si aucun modèle n'est valide, 48 si un modèle est valide et 50 si les deux modèles sont valides.

Dans les cas où le nombre de modèles valides est égal ou inférieur à 1, que le nombre de capteurs délivrant un signal dans la gamme soit égal à 2 (état 8) ou à 3 (état 10), la valeur du paramètre ne peut plus être déterminée par comparaison des modèles. Cette valeur est donc extrapolée.

Dans les cas où le nombre de modèles valides est supérieur ou égal à 2, la comparaison entre ces modèles est possible. Celle-ci permet une détection de la dérive d'un signal, par comparaison des pentes des droites des modèles de voie, et une détection du biais d'un signal, par comparaison des ordonnées à l'origine des droites des modèles de voie.

On va décrire le fonctionnement de la méthode dans le cas où les trois modèles sont valides. On part donc de l'état 34 et on applique le test 52 qui consiste à comparer les différences des pentes des droites des modèles deux à deux à un seuil prédéterminé. Lorsqu'une des différences entre deux voies dépasse ce seuil, on considère qu'il y a une dérive entre ces deux voies.

A l'issue du test 52, on se trouve soit dans l'état 54 si les pentes des trois droites des modèles sont cohérentes, soit dans l'état 56 si il y a dérive sur une voie, soit dans l'état 58 si les pentes des trois droites des modèles sont incohérentes.

Si les trois pentes sont cohérentes (état 54), on compare la différence des ordonnées à l'origine des droites des modèles deux à deux à un seuil prédéterminé. Lorsqu'une différence dépasse ce seuil, on considère qu'il y a un biais entre ces voies. Si les ordonnées à l'origine des droites des trois modèles sont cohérentes (état 62), la valeur du paramètre est estimée en fonction de ces trois modèles. Si une voie est biaisée (état 64), la valeur du paramètre est déterminée en fonction des deux voies cohérentes. Enfin, si il y a un biais entre les trois voies (état 66) la valeur du paramètre doit être extrapolée.

Le traitement effectué dans les états 32 ou 50 dans lesquels deux modèles sont valides est parallèle au traitement effectué dans les cas où les trois modèles sont valides. Un test 68 de comparaison des pentes des droites des deux modèles est effectué. Si la différence entre ces pentes est supérieure à un seuil prédéterminé, les modèles sont incohérents (état 70) et la valeur du paramètre doit être extrapolée. Si ces pentes sont cohérentes (état 72), on effectue le test 74 de comparaison des ordonnées à l'origine des droites des deux modèles. Si un biais est relevé entre ces ordonnées, c'est-à-dire si la différence entre ces ordonnées est supérieure à un seuil prédéterminé, la valeur du paramètre est déterminée par extrapolation ; dans le cas contraire (état 78) la valeur du paramètre est déterminée en fonction des deux modèles.

En résumé, lorsque sur les trois capteurs, deux capteurs au moins délivrent des signaux cohérents, la valeur du paramètre est déterminée en fonction des modèles de voies de ces signaux. Dans le cas contraire, la valeur du paramètre est déterminée par extrapolation en fonction du modèle mémorisé.

Lorsqu'à un instant d'échantillonnage deux voies au moins sont cohérentes, on détermine d'une part la valeur validée du paramètre en fonction des modèles des voies valides et on élabore d'autre part, à partir desdites voies, un modèle pour le calcul de la valeur du paramètre. Plus précisément, la valeur validée du paramètre est fonction de la valeur du signal de chaque capteur défini à l'instant d'échantillonnage par le modèle de voie de ce capteur. A titre d'exemple, on peut choisir comme valeur validée du paramètre la moyenne desdites valeurs des signaux, la valeur maximale desdites valeurs des signaux, la valeur minimale desdites valeurs des signaux.

Quant au modèle mémorisé, ce peut être simplement une droite dont la pente est égale à la moyenne des pentes des modèles des voies cohérentes et dont l'ordonnée à l'origine est égale à la moyenne des ordonnées à l'origine des modèles des voies cohérentes.

Mais la pente (respectivement l'ordonnée à l'origine) du modèle mémorisé peut également être définie par la valeur maximale des pentes (respectivement des ordonnées à l'origine) des droites valides et cohérentes, ou la valeur minimale ou autre.

Ce modèle est utilisé pour extrapoler la valeur du paramètre lorsqu'à un instant d'échantillonnage les voies ne sont pas cohérentes et qu'il n'est donc pas possible de déterminer une valeur du paramètre en fonction des modèles valides. Ce modèle est utilisé pour élaborer une valeur du paramètre dans les états 4, 6, 28, 30, 46, 48, 58, 70, 66 et 76.

Ce modèle n'est remis à jour que lorsque deux voies au moins sont cohérentes. Si pendant plusieurs périodes d'échantillonnage les voies ne sont pas cohérentes, il faut donc recourir à un modèle de plus en plus ancien. La valeur extrapolée devient donc de moins en moins fiable. Il peut donc être préférable, si le nombre d'instants d'échantillonnage depuis la mémorisation du modèle est trop important, par exemple supérieur à une valeur prédéterminée, de ne pas utiliser ce modèle pour l'élaboration de la valeur du paramètre.

Ceci est possible lorsqu'un capteur fonctionne correctement tel que dans les états 6, 30 et 48. Dans ce cas, si un modèle de voie valide peut être associé à l'échantillon des valeurs délivrées par ledit capteur, la valeur validée du paramètre peut être avantageusement déterminée au moyen dudit modèle de voie par extrapolation.

Lorsque le modèle pour le calcul du paramètre est ancien et qu'aucun capteur ne fonctionne correctement, tel que dans les états 4, 28 et 46, la valeur du paramètre ne peut pas être déterminée avec une fiabilité suffisante.

La méthode de validation de l'invention est performante. Elle permet de détecter des défauts isolés tels qu'un biais, une dérive, une rupture de signal, des valeurs aberrantes ou un bruit additif. Elle permet de plus d'identifier la voie présentant ces défauts. Elle permet enfin de reconnaître les quelques cas où une valeur fiable du paramètre ne peut être fournie.

Les figures 2 à 8 représentent des graphiques illustrant la valeur validée du paramètre, selon la méthode de l'invention, en fonction de valeurs mesurées par trois capteurs redondants. Sur chacune de ces figures, chaque voie a été échantillonnée pendant soixante secondes à une période de 0,1 s. A chaque instant d'échantillonnage, la valeur du paramètre est déterminée en fonction de l'échantillon comprenant, pour chaque voie, 30 valeurs mesurées. Sur chacun de ces échantillons, on accepte la présence de six valeurs aberrantes, soit une densité de 20%. Pour les différents seuils utilisés dans les tests, on a retenu les valeurs suivantes :

- seuil de corrélation : 0,86,
- seuil de dérive : 0,3 unité par seconde,
- seuil de biais : 5 unités.

La valeur retenue pour le seuil de biais a pour but une visualisation plus aisée, afin que les trois signaux délivrés par les capteurs et le signal validé ne se superposent pas. Dans la pratique, ce seuil est beaucoup plus faible.

Chaque graphique comporte trois courbes $S_1$, $S_2$ et $S_3$ qui sont les signaux délivrés par trois capteurs redondants. La valeur validée du paramètre en fonction du temps est représentée par le signal S. Sur chacun des graphiques, l'axe des abscisses note les instants d'échantillonnage et l'axe des ordonnées l'amplitude des signaux en unités arbitraires.

La figure 2 correspond au cas où les signaux délivrés par les trois capteurs sont cohérents (état 62, figure 1B). La valeur du signal S à chaque instant d'échantillonnage est alors déterminée par exemple par la moyenne des tendances des trois signaux délivrés par les capteurs.

Sur la figure 3, on a représenté le cas où le signal $S_3$ présente un biais à l'instant d'échantillonnage 300. Cette défaillance est détectée à l'instant TE, une seconde après l'apparition du défaut. Le signal $S_3$ n'est alors plus pris en compte pour l'élaboration du signal S. Le décrochement important du signal validé S à l'instant 310 est dû à la valeur importante du seuil de biais. En pratique, cette discontinuité est beaucoup plus faible car la valeur du seuil de biais est plus faible que celle qui a été choisie.

Sur la figure 4, le signal $S_1$ présente une dérive à partir de l'instant d'échantillonnage 300 (état 56 puis 76, figure 1A). Cette défaillance du capteur est détectée 1,6 s après l'apparition du défaut, c'est-à-dire à l'instant TE égal à 316. Le signal validé S subit alors un décalage correspondant à l'abandon de la prise en compte du signal $S_1$.

Sur la figure 5, il y a une rupture du signal $S_3$ à l'instant d'échantillonnage 304 (état 8, figure 1A). Le signal $S_3$ devient hors gamme. L'alarme est déclenchée 0,4 s après l'apparition de la rupture de ce signal.

Sur la figure 6, le signal $S_3$ présente des valeurs aberrantes. La densité de ces valeurs aberrantes ne dépassant pas 20%, c'est-à-dire 6 valeurs aberrantes sur les trente valeurs mesurées constituant un échantillon, aucun défaut n'est détecté. La méthode de l'invention permet de reconnaître ces valeurs aberrantes et de les éliminer du signal $S_3$ de manière à produire un modèle valide de ce signal. Le signal validé S est donc obtenu à partir de trois modèles valides des signaux délivrés par les capteurs.

Sur la figure 7, on détecte un bruit à partir de l'instant 317 sur le signal $S_3$, c'est-à-dire une densité de valeurs aberrantes supérieure au seuil fixé. Ce bruit est détecté 1,7 s après son apparition. A partir de cet instant, seuls les signaux $S_1$ et $S_2$ sont pris en compte pour l'élaboration du signal validé S.

Les figures 3 à 7 montrent l'excellent comportement de la méthode de validation de l'invention lorsqu'un seul des trois capteurs présente une défaillance. Dans tous les cas, en effet, le signal validé peut être élaboré, la défaillance est détectée et sa nature identifiée très rapidement.

On a représenté sur la figure 8 le cas où deux signaux présentent un biais à partir de l'instant d'échantillonnage 300 (état 66, figure 1B). Cette double défaillance est détectée au bout d'une seconde. Le signal S est alors extrapolé à l'aide de la tendance du phénomène mis en mémoire avant l'apparition du défaut. Cette extrapolation est poursuivie pendant 150 instants d'échantillonnage après l'apparition du défaut. Le modèle mis en mémoire est alors considéré comme trop ancien pour délivrer un signal S fiable.

La méthode de l'invention permet donc de délivrer pendant un certain temps après l'apparition d'une défaillance multiple un signal S qui a une forte probabilité d'être proche de la valeur vraie du paramètre. Ceci est important car on sait, par expérience, qu'il est préférable, lors de l'apparition d'une défaillance multiple, de continuer à fournir à l'opérateur une information même si sa fiabilité est suspecte. Ceci laisse à l'opérateur le temps de prendre les dispositions nécessaires.

L'information peut être délivrée à l'opérateur par un tableau tel que celui représenté schématiquement sur la figure 9. Ce tableau 80 comprend une zone 82 identifiant le paramètre mesuré, ici la pression primaire dans un réacteur nucléaire, un afficheur 84 indiquant la valeur validée du paramètre et un afficheur 86 indiquant la tendance.

Il peut également comprendre avantageusement un afficheur 88 délivrant des messages sur l'état des capteurs mesurant la pression primaire. Les messages peuvent être affichés dans des couleurs différentes selon la gravité de la défaillance.

Le tableau peut enfin être complété par un commutateur 90 permettant de sélectionner soit le fonctionnement automatique soit, en cas de défaillances multiples, une voie à partir de laquelle la valeur du paramètre est déterminée.

## Revendications

1. Méthode de validation de la valeur d'un paramètre à des instants successifs séparés par des intervalles de temps constants dans laquelle, à chacun desdits instants, on échantillonne des signaux délivrés par des voies mesurant ou calculant ledit paramètre pour obtenir un échantillon de N valeurs prises par le paramètre, ladite méthode étant caractérisée en ce que la valeur validée dudit paramètre à un instant T est déterminée en fonction d'un échantillon de N valeurs de chaque voie prises par le paramètre aux N instants précédents T, où N est un entier supérieur ou égal à 2; en ce que, à chaque instant d'échantillonnage, on remplace chaque échantillon de N valeurs d'une voie par un modèle de voie; en ce qu'on teste la validité dudit modèle de voie par un critère de dispersion; et en ce qu'on définit un modèle pour le paramètre et la valeur validée du paramètre en fonction des modèles de voies valides.

2. Méthode selon la revendication 1, caractérisée en ce que le modèle de chaque voie est la droite obtenue à partir de l'échantillon de ladite voie par la méthode des moindres carrés, ledit modèle étant valide si le coefficient de dispersion entre ledit échantillon et ladite droite est inférieur à un seuil de dispersion prédéterminé.

3. Méthode selon la revendication 2, caractérisée en ce que, lorsqu'un modèle de voie n'est pas valide, on élimine de l'échantillon la valeur dont la distance au point correspondant sur la droite est la plus grande.

4. Méthode selon la revendication 2, caractérisée en ce que, lorsqu'un modèle de voie n'est pas valide, on modifie l'échantillon de ladite voie en remplaçant la valeur qui s'écarte le plus de la moyenne des valeurs dudit échantillon par ladite moyenne, et on remplace le modèle de voie par le modèle de voie associé à l'échantillon modifié.

5. Méthode selon la revendication 1, caractérisée en ce que l'on fait un test de cohérence entre les modèles valides, les modèles non cohérents n'étant pris en compte ni pour l'élaboration du modèle pour le paramètre ni pour la détermination de la valeur validée du paramètre.

6. Méthode selon la revendication 5, caractérisée en ce que pour tester la cohérence des modèles valides, on teste au moins l'une des caractéristiques parmi la dérive, le biais, le bruit, la saturation.

7. Méthode selon les revendications 2 et 6, caractérisée en ce que pour détecter la dérive d'une voie dont le modèle est valide, on compare la différence des pentes des droites des modèles desdites voies deux à deux à un seuil de dérive prédéterminé, les modèles de voies présentant une dérive n'étant pris en compte ni pour l'élaboration du modèle pour le paramètre ni pour la détermination de la valeur validée du paramètre.

8. Méthode selon les revendications 2 et 6, caractérisée en ce que pour détecter le biais d'une voie dont le modèle est valide, on compare l'ordonnée à l'origine des droites des modèles desdites voies deux à deux à un seuil de biais prédéterminé, les modèles de voies présentant un biais n'étant pris en compte ni pour l'élaboration du modèle pour le paramètre ni pour la détermination de la valeur validée du paramètre.

9. Méthode selon l'une quelconque des revendications 2 à 8, caractérisée en ce que le modèle pour le paramètre est une droite dont la pente est la moyenne des pentes des droites des modèles valides et cohérents et dont l'ordonnée à l'origine est la moyenne des ordonnées à l'origine des droites des modèles valides et cohérents.

10. Méthode selon la revendication 9, caractérisée en ce que, lorsqu'à un instant d'échantillonnage le nombre de modèles valides et cohérents est inférieur à un nombre prédéterminé, ou conserve comme modèle pour le paramètre le dernier modèle élaboré.

11. Méthode selon la revendication 9, caractérisée en ce que la valeur validée du paramètre est déterminée en fonction des modèles valides et cohérents si leur nombre est supérieur ou égal audit nombre prédéterminé et en fonction du modèle pour le paramètre si leur nombre est inférieur audit nombre prédéterminé.

## Claims

1. Method for validating the value of a parameter at successive times separated by constant time intervals in which, at each of these times, signals supplied by channels measuring or calculating said parameter are sampled to obtain a sample of N values taken by the parameter, characterized in that the validated value of said parameter at a time T is determined as a function of a sample of N values of each channel taken by the parameter at the preceding N items, in which N is an integer equal to or exceeding 2, in that at each sampling time, each sample of N values of a channel is replaced by a channel model, in that the validity of said channel model is tested by a dispersion criterion and in that a model for the parameter and the validated value of the parameter are defined as a function of models of valid channels.

2. Method according to claim 1, characterized in that the model of each channel is the straight line obtained from the sample of said channel by the method of least squares, said model being valid if the dispersion coefficient between said sample and said line is below a predetermined dispersion threshold.

3. Method according to claim 2, characterized in that when a channel model is not valid, the value whose distance from the corresponding point of the straight line is greatest is eliminated from the sample.

4. Method according to claim 2, characterized in that when a channel model is not valid, the sample of said channel is modified by replacing the value which varies most from the mean of the values of said channel by said means and the channel model is replaced by the channel model associated with the modified sample.

5. Method according to claim 1, characterized in that a coherent test is carried out between the valid models, the non-coherent models not being taken into account for working out the model for the parameter or for determining the validated value of the parameter.

6. Method according to claim 5, characterized in that at least one of the characteristics from among the drift, bias, noise and saturation is tested for testing the coherence of the valid models.

7. Method according to claims 2 and 6, characterized in that for detecting the drift of a channel, whose model is valid, there is a pairwise comparison of the difference in the slopes of the straight lines of the models of said channel with a predetermined drift threshold, the models of channels having a drift not being taken into account for working out the model for the parameter or for then determining the validated value of the parameter.

8. Method according to claims 2 and 6, characterized in that for detecting the bias of a channel, whose model is valid, there is a pairwise comparison of the ordinate at the origin of the straight lines of the models of said channels with a predetermined bias threshold, the models of channels having a bias not being taken into account for working out the model for the parameter or for determining the validated value of the parameter.

9. Method according to any one of the claims 2 to 8, characterized in that the model for the parameter is a straight line, whose slope is the mean of the slope of the straight lines of valid, coherent models and whose ordinate at the origin is the mean at the ordinates at the origin of the straight lines of valid, coherent models.

10. Method according to claim 9, characterized in that if the number of valid, coherent models is below a predetermined number, at a sampling time, the last model produced is retained as the model for the parameter.

11. Method according to claim 9, characterized in that the validated value of the parameter is determined as a function of the valid, coherent models, if the number is equal to or exceeds said predetermined number and a function of the model for the parameter if their number is below said predetermined number.

**Patentansprüche**

1. Verfahren zur Kontrolle eines Parameterwertes in aufeinanderfolgenden, durch konstante Zeitintervalle voneinander getrennten Zeitpunkten, wobei man an jedem dieser Zeitpunkte Signale abtastet, die von Meß- oder Berechnungskanälen für den genannten Parameter geliefert werden, um ein Muster aus N von dem Parameter genommenen Werten zu erhalten, dadurch gekennzeichnet, daß der kontrollierte Wert des genannten Parameters in einem Zeitpunkt T in Funktion eines Musters aus N Werten eines jeden Kanals bestimmt wird, die von dem Parameter in N vorangehenden Zeitpunkten T genommen wurden, wobei N eine ganze Zahl größer oder gleich 2 ist, und daß in jedem Abtastzeitpunkt man jedes Muster aus N Werten eines Kanals durch ein Kanalmodell ersetzt, und daß man die Gültigkeit des genannten Kanalmodells durch ein Verteilungskriterium prüft, und daß man ein Modell für den Parameter und den kontrollierten Parameterwert in Abhängigkeit der gültigen Kanalmodelle definiert.

2. Verfahren nach Anspruch 1, dadurch gekennzeichnet, daß das Modell eines jeden Kanals die Gerade ist, die man aus dem Muster des genannten Kanals nach dem Verfahren kleinster Quadrate erhält, wobei das genannte Modell gültig ist, wenn er Verteilungskoeffizient zwischen dem genannten Muster und der genannten Geraden unter einem vorbestimmten Verteilungsschwellenwert liegt.

3. Verfahren nach Anspruch 2, dadurch gekennzeichnet, daß, wenn ein Kanalmodell nicht gültig ist, man aus dem Muster den Wert eliminiert, dessen Distanz zum entsprechenden Punkt auf der Geraden am größten ist.

4. Verfahren nach Anspruch 2, dadurch gekennzeichnet, daß, wenn ein Kanalmodell nicht gültig ist, man das Muster des genannten Kanals modifiziert, indem man den Wert, der am weitesten vom Mittelwert des genannten Musters entfernt ist, durch den genannten Mittelwert ersetzt, und man das Kanalmodell durch jenes Kanalmodell ersetzt, das dem modifizierten Muster zugeordnet ist.

5. Verfahren nach Anspruch 1, dadurch gekennzeichnet, daß man einen Kohärenztest zwischen den gültigen Modellen ausführt, wobei die nichtkohärenten Modelle weder bei der Ausarbeitung des Modells für den Parameter noch für die Bestimmung des gültigen Parameterwertes in Betracht gezogen werden.

6. Verfahren nach Anspruch 5, dadurch gekennzeichnet, daß man zum Testen der Kohärenz der gültigen Modelle wenigstens eine der nachfolgenden Eigenschaften prüft: Drift, Richtung, Rauschen und Sättigung.

7. Verfahren nach den Ansprüchen 2 und 6, dadurch gekennzeichnet, daß zur Ermittlung der Drift eines Kanals, dessen Modell gültig ist, man die Differenz der Neigungen der Geraden der Modelle der genannten Kanäle jeweils zu zweit mit einem vorbestimmten Driftschwellenwert vergleicht, wobei die Kanalmodelle, die eine Drift aufweisen, weder für die Ausarbeitung des Modells für den Parameter noch für die Bestimmung des kontrollierten Wertes des Parameters in Betracht gezogen werden.

8. Verfahren nach den Ansprüchen 2 und 6, dadurch gekennzeichnet, daß zur Bestimmung der Driftrichtung eines Kanals, dessen Modell gültig ist, man die Ordinate im Ursprung der Geraden der genannten Kanalmodelle jeweils paarweise mit einem vorbestimmten Richtungsschwellenwert vergleicht, wobei die Kanalmodelle, die eine Driftrichtung aufweisen, weder bei der Ausarbeitung des Modells für den Parameter noch für die Bestimmung des kontrollierten Wertes des Parameters in Betracht gezogen werden.

9. Verfahren nach einem der Ansprüche 2 bis 8, dadurch gekennzeichnet, daß das Modell für den Parameter eine Gerade ist, deren Neigung der Mittelwert der Neigungen der Geraden der gültigen und kohärenten Modelle ist und deren Ordinate im Ursprung der Mittelwert der Ordinaten im Ursprung der Geraden der gültigen und kohärenten Modelle ist.

10. Verfahren nach Anspruch 9, dadurch gekennzeichnet, daß, wenn in einem Abtastzeitpunkt die Anzahl der gültigen und kohärenten Modelle kleiner als eine vorbestimmte Zahl ist, man als Modell für den Parameter das zuletzt erarbeitete Modell aufbewahrt.

11. Verfahren nach Anspruch 9, dadurch gekennzeichnet, daß der kontrollierte Wert des Parameters in Abhängigkeit der gültigen und kohärenten Modelle bestimmt wird, wenn ihre Anzahl größer oder gleich der genannten vorbestimmten Anzahl ist, und in Abhängigkeit vom Modell für den Parameter bestimmt wird, wenn ihre Anzahl kleiner als die genannte vorbestimmte Zahl ist.

FIG. 1A

CAPTEUR DANS LA GAMME

8 — 2 CAPTEURS  6 — 1 CAPTEUR  4 — 0 CAPTEUR  2  3 CAPTEURS — 10

12 — CALCUL DES MODELES  ESTIMATION MODELE OU ESTIMATION VOIE  ESTIMATION MODELE  CALCUL DES MODELES — 14

36 — MODELES VALIDES — 42  18  MODELES VALIDES — 16

38 — 0 MODELE VALIDE  40 — 1 MODELE VALIDE  2 MODELES VALIDES  0 MODELE VALIDE — 18  1 MODELE VALIDE — 20  2 MODELES VALIDES — 22  3 MODELES VALIDES — 24

RECHERCHE DE VALEURS ABERRANTES — 44  26 — RECHERCHE DE VALEURS ABERRANTES

46 — 0 MOD. VAL.  48 — 1 MOD. VAL.  2 MOD. VAL. — 50  28 — 0 MOD. VAL.  30 — 1 MOD. VAL.  2 MOD. VAL. — 32  3 MOD. VAL. — 34

ESTIMATION MODELE  ESTIMATION MODELE OU ESTIMATION VOIE VALIDE  ESTIMATION MODELE  ESTIMATION MODELE OU ESTIMATION VOIE VALIDE

VERS 68  VERS 52

EP 0 178 964 B1

FIG. 1B

EP 0 178 964 B1

FIG. 2

FIG. 3

TE = 310
DEFAILLANCE CAPTEUR 3

FIG. 4

TE = 316
DEFAILLANCE CAPTEUR 1

FIG. 5

TE = 304
DEFAILLANCE CAPTEUR 3

# FIG. 6

# FIG. 7

TE = 317
DEFAILLANCE CAPTEUR 3

# FIG. 8

TE = 310
DEFAILLANCE PLUS D'UN CAPTEUR

# FIG. 9